# EUROPEAN PATENT SPECIFICATION

(11) **EP 3 812 235 B1**
(45) Date of publication and mention of the grant of the patent: **23.08.2023**
(21) Application number: 20203133.2
(22) Date of filing: 21.10.2020
(51) Int. Cl.: B61D 27/00, B60H 1/32, B60P 3/20, F25D 19/00, B60H 1/00

(54) **TRANSPORT REFRIGERATION UNIT ADAPTER FRAME FOR RAILWAY CAR INSTALLATION**
ADAPTERRAHMEN FÜR EINE TRANSPORTKÜHLEINHEIT FÜR EINE EISENBAHNWAGENINSTALLATION
CADRE D'ADAPTATEUR D'UNITÉ DE RÉFRIGÉRATION DE TRANSPORT POUR UNE INSTALLATION DE WAGON

(30) Priority: 22.10.2019 US 201962924331 P
(43) Date of publication of application: 28.04.2021
(73) Proprietor: Carrier Corporation, Palm Beach Gardens, FL 33418 (US)
(72) Inventor: STOCKBRIDGE, Michael, Canastota, NY 13032 (US); SENF, Raymond L., Jr., Central Square, NY 13036 (US)
(74) Representative: Dehns

(56) References cited:
- EP-A2- 0 058 821
- WO-A2-2007/106066
- US-A- 4 182 134
- US-A- 4 551 986
- US-A- 4 736 597
- US-A1- 2009 211 286

## Description

Exemplary embodiments pertain to the art of installation of a transport refrigeration unit (TRU).

As urbanization continues to shift more people move into urban environments, there can be constant need for the transport of food and other perishable items in environmentally controlled conditions. In order to deliver fresh products from farm to table a portfolio of technologies may be employed. For example, trucks and trailers outfitted with TRU's allow for the transport of foodstuffs via roadway by providing environmentally controlled cargo space that can preserve their freshness and longevity.

Railway hauling can provide an energy efficient alternative to roadway transport for long distance hauling of goods. It is becoming increasingly common for a TRU to be installed directly onto a railway car in order to facilitate rail transport of refrigerated goods.

EP 058 821 A2 discloses a transport refrigeration machine comprising a frame containing an evaporator housing.

US 4 182 134 A discloses a structural arrangement of a transport refrigeration unit for a trailer that utilizes a generally planar frame attached to a front wall of the trailer.

WO 2007/106066 A2 discloses a cover of a transport refrigeration unit comprising a rear frame member, forwardly extending tabs, and a bottom pane

The invention is defined by the features of claim 1 and by the method-steps of claim 13.

According to a first aspect of the invention an adapter frame for attaching a transport refrigeration unit (TRU) to a railway car is provided, the adapter frame comprising: a window and a supporting section, the window having a rectangular shape, the supporting section extending from an edge of the window and comprising two or more truss members spanning from an edge of the window to a corresponding edge of the supporting section, wherein the adapter frame is configured for installation between the TRU and the railway car such that when installed a distal end of a protruding evaporator section of the TRU protrudes into the window.

When installed the distal end of the TRU may extend past an interior surface of the railway car wall.

When installed the distal end of the TRU may be flush with an interior surface of the railway car wall.

When installed the distal end of the TRU may not extend past an interior surface of the railway car wall.

The adapter frame may further comprise a plurality of fastening features disposed on a surface of the adapter frame.

The fastening features may comprise a combination of a threaded stud, a captured nut, a slot or opening for accepting a bolt, a weld stud, a flange, a tab, or a combination comprising at least one of the foregoing.

The adapter frame may further comprise a corner support fastened to a surface of the adapter frame, the corner support extending diagonally between two adjacent structural segments forming a corner.

The supporting section may have a quadrilateral shape where a width dimension is larger than a height dimension and the corner support may extend when installed along a TRU side surface of the adapter frame, adjacent to a corner of the quadrilateral shape, from one side to an adjacent side of the supporting section.

The structural segments may comprise quadrilateral cross-sectional shape.

The window may comprise a width of 40 inches (1m) to 60 inches (1.5m), a height of 8 inches (20cm) to 20 inches (50cm).

The window may comprise a width of 60 inches (1.5m) to 80 inches (2m), a height of 40 inches (1m) to 60 inches (1.5m).

The window may align when installed with an opening in a wall of the railway car.

According to a second aspect of the invention a method of installing a TRU onto a railway car is provided, the method comprising attaching an adapter frame onto the TRU using a plurality of fastening features disposed along a surface of the adapter frame to form a combined adapter frame and TRU, and attaching the combined adapter frame and TRU onto a railway car using a plurality of fastening features disposed along an opposing surface of the adapter frame thereby securing the TRU, adapter frame and railway car together, or attaching an adapter frame onto the railway car using a plurality of fastening features disposed along a surface of the adapter frame to form a combined adapter frame and railway car, and attaching the TRU onto the combined adapter frame and railway car using a plurality of fastening features disposed along an opposing surface of the adapter frame thereby securing the TRU, adapter frame and railway car together.

The method may include sealing a gap between the TRU and a railway car wall.

The following descriptions are by way of example only and should not be considered limiting in any way. With reference to the accompanying drawings, like elements are numbered alike:
FIG. 1 is a schematic view of a TRU.
FIG. 2 is an angled rear schematic view of a TRU.
FIG.3 is a side schematic view of a TRU.
FIG. 4 is a schematic view of a TRU installed onto a trailer without an adapter frame.
FIG. 5 is a schematic view of a TRU installed onto a railway car without an adapter frame.
FIG. 6 is a schematic view of an adapter frame for attaching a TRU to a railway car.
FIG. 7 is a schematic view of an adapter frame for attaching a TRU to a railway car.
FIG. 8 is a schematic view of a TRU installed onto a railway car with an adapter frame.
FIG. 9 is a schematic of a method of installing a TRU onto a railway car using an adapter frame.
FIG. 10 is a schematic of a method of installing a TRU onto a railway car using an adapter frame.

A detailed description of one or more embodiments of the disclosed apparatus and method are presented herein by way of exemplification and not limitation with reference to the Figures.

A transport refrigeration unit (TRU) is a refrigeration device configured to cool a cargo space by blowing air from the cargo space over a heat absorbing evaporator coil thereby cooling the air, and returning it to the cargo space. A TRU can be designed to meet a number of customer and application requirements, such as the outer physical envelope of the TRU. The shape and overall dimensions of a TRU must ensure that once installed on a trailer there is adequate clearance for powered truck operation and maintenance, e.g., turning, fueling, accessing truck compartments and/or maintenance items, and the like. In some cases, these requirements can limit the arrangement of components within the allotted volume for the TRU. The resultant TRU layout can include otherwise unnecessary protrusion into the trailer cargo space.

Unlike some trailers, railway cars are generally not subject to swing radii or other powered truck maintenance activities. Therefore the outer envelope of a refrigeration unit is less constrained in a railway car application in comparison to trailer application. However, when a TRU is installed flush to the side of a railway car, the air outlet of the TRU can protrude into the conditioned cargo space similar to a trailer installation. Due at least in part to commonality of shipping sizes (e.g. shipping pallets), any extension from the interior wall of a railway car into the conditioned cargo space can reduce the cargo payload (e.g., by an entire row of shipping pallets). Reduction in payload can have a correspondingly negative impact on shipping cost, speed, and capacity. To overcome at least this limitation an adapter frame for attaching a TRU to a railway car is disclosed.

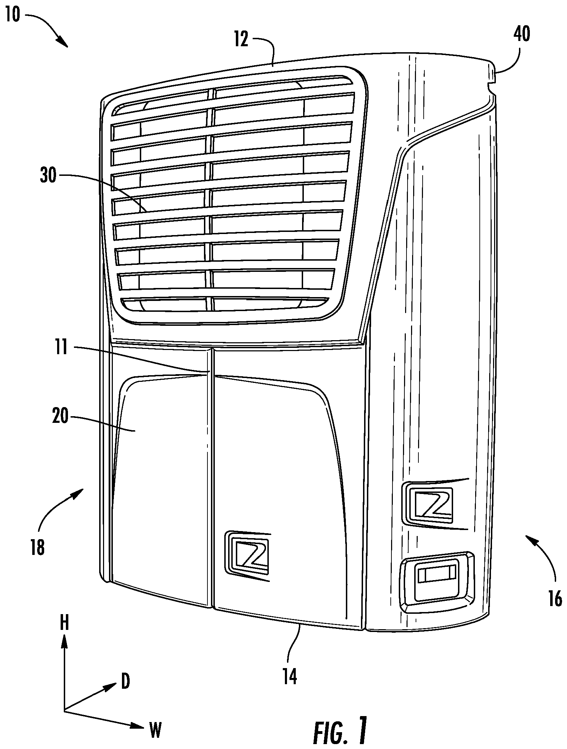

Figure 1 is an illustration of a front view of a TRU **10.** The TRU **10** has an outer enclosure **20,** a condenser air inlet **30,** and condenser air outlet **40.** The TRU **10** can have additional interfaces for power, fuel (e.g., diesel, LPG, CNG, and the like), drain (e.g. condensate), control, communication, and the like. The TRU **10** can be any suitable TRU **10** having an air inlet /outlet configured for cooling the cargo space upon installation. For example, the TRU **10** can include a refrigeration unit such as the truck or trailer refrigeration systems manufactured by Carrier Corporation, Palm Beach Gardens, FL, USA (e.g. Vector^{™} 8500, Vector^{™} 8600, Vector^{™} 8611, X4^{™} 7300, X4^{™} 7500, Supra^{®} 660, Supra^{®} 760, Supra^{®} 860, Supra^{®} 960, and the like).

The TRU **10** has a width measured along the w-dimension, a height measured along the h-dimension, and a depth measured along the d-dimension in the attached figures. The outside of the TRU **10** can be box shaped or can include aerodynamic features as the outside surface, such as curved edges. In any embodiment the TRU can include rounded or contoured edges, between the face **11** and top **12,** bottom **14,** and/or sides **16/18** of the TRU **10.**

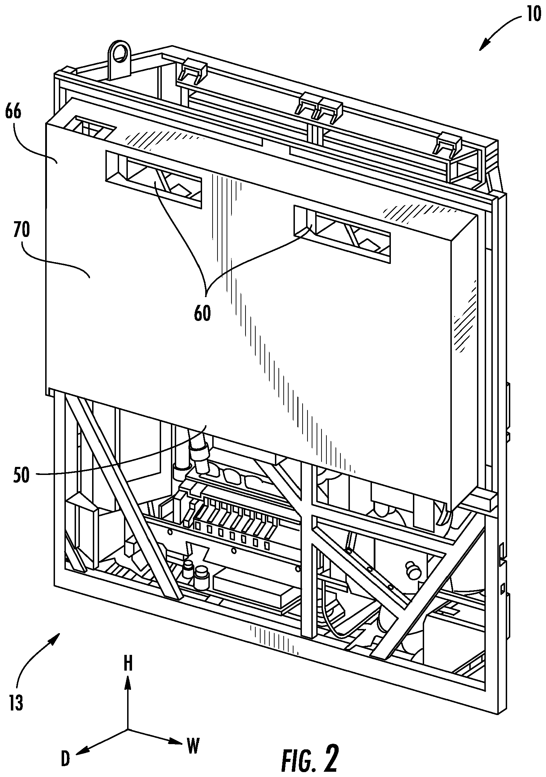

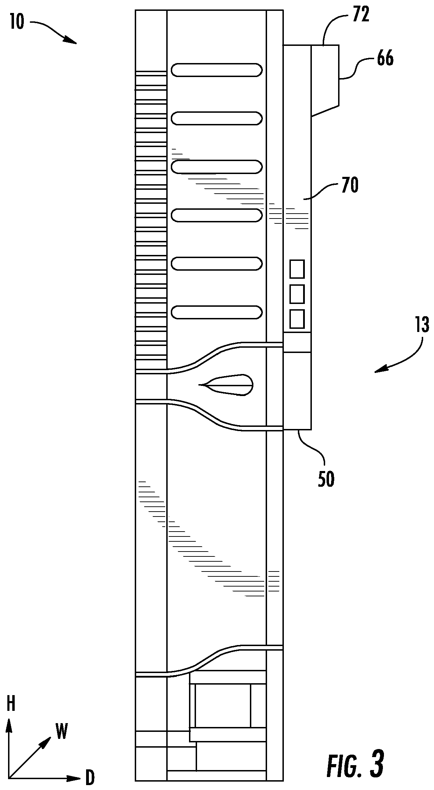

Figure 2 is an illustration of a rear view of a TRU **10** with the outer enclosure **20** removed. The back side **13** (cargo side) of the TRU **10** can be flat, or have a surface shaped corresponding to the outside surface of a trailer. The TRU can have a protruding evaporator section **70** having the cargo air inlet **50** (which can be located for example under the protruding evaporator section **70**) and one or more refrigerated cargo air outlets **60.** As shown in Figure 3, the protruding evaporator section **70** can include air outlet extensions **72** which can protrude further from the main body of TRU **10** than the protruding evaporator section **70** and can define a distal end **66** of the protruding evaporator section.

For trailer applications, the protruding evaporator section **70** can have a width (extending in the w dimension of the attached figures) of about 60 inches (1. 5m) to about 80 inches (2m), or about 65 inches (1.6m) to about 68 inches (1.7m), or about 66.3 inches (1.68m), a height (extending along the h dimension in the attached figures) of about 40 inches (1m) to about 60 inches (1.5m), or about 44 inches (1.1m) to about 48 inches (1.2m), or about 45.3 inches (1.15m), and a protruding distance (extending along the d dimension of the attached figures) of about 1 inch (3cm) to about 15 inches (38cm), or about 6 inches (15cm) to about 10 inches (25cm), or about 8.2 inches (21cm).

For truck applications, the protruding evaporator section **70** can have a width of about 40 inches (1m) to about 60 inches (1.5m), or about 48 inches (1.2m) to about 52 inches (1.3m), or about 48.2 inches (1.23m), a height of about 8 inches (20cm) to about 20 inches (50cm), or about 10 inches (25cm) to about 14 inches (36cm), or about 13 inches (33cm), or about 11.4 inches (29.0cm), and a protruding distance of about 1 inch (3cm) to about 32 inches (81cm), or about 20 inches (51cm) to about 32 inches (81cm), or about 28.8 inches (73.2cm), or about 24.8 inches (63.0cm). In an embodiment the protruding evaporator section **70** has a width of about 48.2 inches (1.22m), a height of about 13 inches (33cm) and a protruding distance of about 28.8 inches (73.2cm). In an embodiment the window **420** has a width of about 48.2 inches (1.22m), a height of about 11.4 inches (29.0cm) and a protruding evaporator distance of about 24.8 inches (63.0cm).

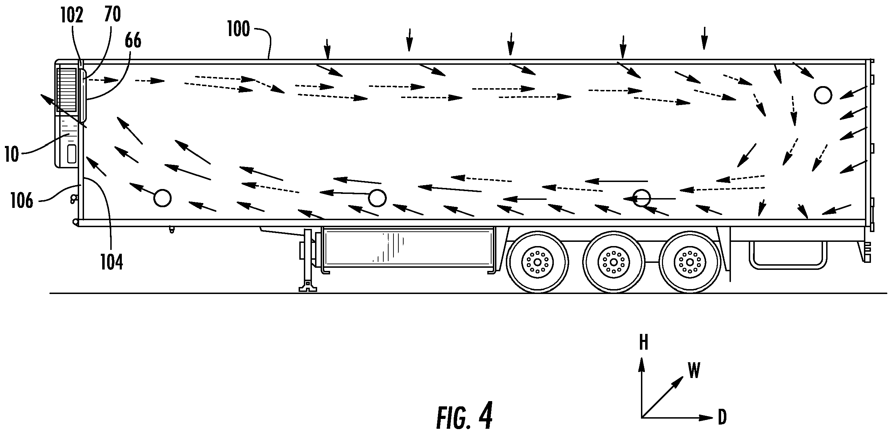

In truck/trailer applications the TRU **10** is flush mount to the outside surface of a trailer **100** as shown in Figure 4. The trailer **100** is configured with an opening **102** for receiving the protruding evaporator section **70.** Once installed the distal end **66** extends past the interior surface **104** of a trailer wall **106.** Although undesirable, the size of the refrigeration unit components (e.g., compressor, evaporator coil, condenser coil, expansion device, plumbing, controller, and the like) and limited volume they may occupy outside the trailer can result in pushing protruding evaporator section **70** into the cargo space.

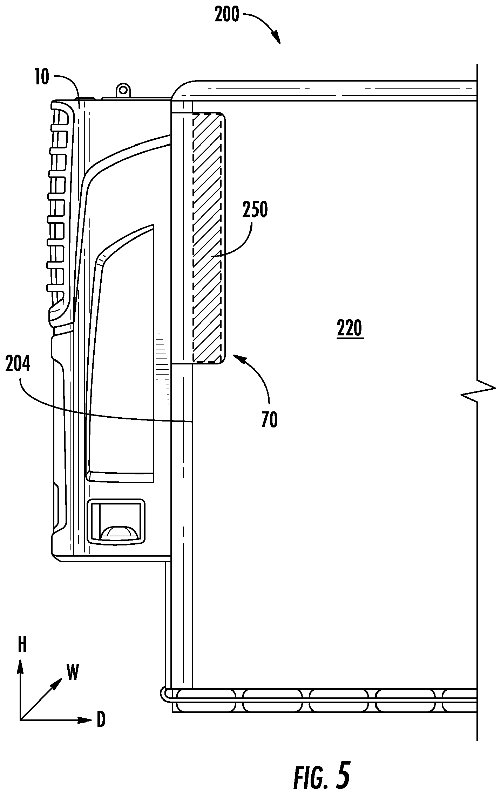

Figure 5 is an illustration of a TRU **10** installed directly onto a wall of a railway car **200** without the use of the inventive adapter frame as disclosed herein. In this installation, the protruding evaporator section **70** extends past an interior surface **204** of the railway car **200** and creates an obstructed volume **250** (shaded area in Figure 5) of the cargo volume **220** of the railway car **200.** The size of the obstructed volume can be reduced through the use of the disclosed adapter frame **400,** which can act to shift the protruding evaporator section **70** out of the opening **102** (in a negative direction along the d dimension in the attached figures) and away from the railway car cargo volume **220.** Even small outward movement of the protruding evaporator section **70** from the cargo volume **220** can create significant advantages in payload capacity of the cargo volume **220.** In some cases, this can allow for an entire row of shipping pallets to be added to a railway car's cargo volume **220.**

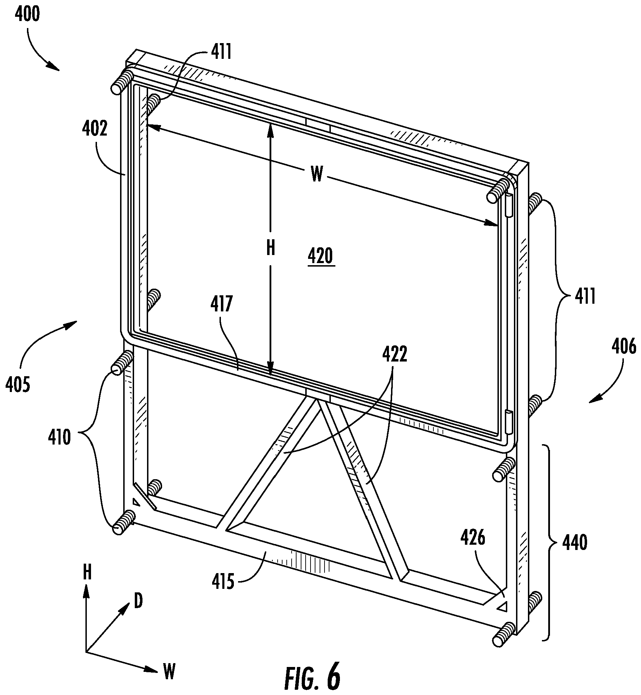

Figure 6 is an illustration of an adapter frame **400** having a plurality of structural segments **402** fastened together to form a window **420** and a supporting section **440.** The plurality of structural segments **402** can be any shape corresponding to the outside surface of a railway car **200** and the back side **13** of a TRU **10.** The plurality of structural segments **402** can be formed from any suitably strong material capable of mounting and supporting a TRU **10** to a railway car **200.** For example the structural segments **402** can be made of steel, aluminum, iron, alloys thereof, or a combination comprising at least one of the foregoing. In an example the structural segments **402** can be made of a polymer including for example polyethylene (PE), acrylonitrile butadiene styrene (ABS) polymer, high-density polyethylene (HDPE) polymer, and the like, and copolymers thereof. In an example the structural segments **402** can be made of a polymer composite, where the composite material includes a polymer resin such as a polymer previously mentioned and a woven, continuous, or chopped structural fiber, e.g., glass fiber, carbon fiber, aramid fiber, or the like.

The plurality of structural segments **402** can have any cross sectional shape, for example, the cross-sectional shape of any one or more segment of the plurality of structural segments can be quadrilateral (e.g., square, rectangular, and the like), triangular, other simple closed polygons, I-shaped, H-shaped, C-shaped, U-shaped, T-shaped, and the like. For example, the plurality of structural segments **402** can be linear, e.g., not having appreciable curvature in a given plane. The cross-sectional thickness T (extending along the t axis in the attached figures) of the adapter can

The plurality of structural segments **402** can be fastened in any suitable way to secure the segments and form the adapter frame **400.** For example, the plurality of structural segments **402** can be welded (arc, ultrasonic, and the like), bolted or otherwise secured together to form the window **420** and the supporting section **440.** In another example, the structural segments **402** can be formed integrally as a single unitary structure such as die cast, polymer molding, co-molding, multi shot molding, or other molding process. The window **420** can have any shape, for example it can have a shape corresponding to the outer dimensions of the protruding evaporator section **70** such that the protruding evaporator section **70** can slidably fit into the window **420** for purposes of installing and removing the TRU **10** from the adapter frame **400.** For example, the window **420** can have a quadrilateral shape, such as square, rectangular, trapezoidal, and the like. The window **420** can optionally include additional framing extending from a front/rear surface (**405**/**406**) of the adapter frame **400** for added structural support of the window **420.** Additional framing can be used for securing the protruding evaporator section **70** to the window **420.** For example, the window **420** can be formed of steel box beam and an additional steel frame formed of steel having an L-shaped cross section welded to, and extending from, a front surface **405** of the adapter frame **400.** The L-shape can provide a flange for fastening the TRU **10** or the railway car **200** to the adapter frame **400.**

In an example, the window **420** is rectangular, the window has a width dimension **W** (extending along the w axis in the attached figures) that is larger than the height dimension **H** (extending along the h axis in the attached figures) and the supporting section **440** includes two or more truss members **422** spanning from an edge of the window **420** to a corresponding edge of the supporting section **440.**

Corresponding to the dimensions of the protruding evaporator section **70** mentioned previously for trailer applications, the window **420** of the adapter frame **400** can have a width **W** of about 60 inches (1.5m) to about 80 inches (2m), or about 65 inches (1.6m) to about 68 inches (1.7m), or about 66.8 inches (1.70m), a height **H** of about 40 inches (1m) to about 60 inches (1.5m), or about 45 inches (1.1m) to about 48 inches (1.2m), or about 46 inches (1.2m), and a thickness (extending along the d dimension of the attached figures) of about 1 inch (3cm) to about 16 inches (41cm), or about 2 inches (5cm) to about 10 inches (25cm), or about 8.2 inches (21cm). In an embodiment the window **420** of the adapter frame **400** has a width of 66.8 inches (1.70m), a height of 46 inches (1.2m) and a thickness of between 1 and 16 inches (3 and 41cm).

Corresponding to the dimensions of the protruding evaporator section **70** mentioned previously for truck applications, the window **420** of the adapter frame **400** can have a width **W** of about 40 inches (1m) to about 60 inches (1.5m), or about 48 inches (1.2m) to about 52 inches (1.3m), or about 49 inches (1.2m), a height **H** of about 8 inches (20cm) to about 20 inches (51cm), or about 10 inches (25cm) to about 14 inches (36cm), or about 13 inches (33cm), or about 11.4 inches (29.0cm) and a thickness (extending along the d dimension of the attached figures) of about 1 inch (3cm) to about 32 inches (81cm), or about 1 inches (3cm) to about 16 inches (41cm), or about 10 inches (25cm), or about 8 inches (20cm), or about 6 inches (15cm). In an embodiment the window **420** of the adapter frame **400** has a width of 49 inches (1.2m), a height of 13.8 inches (35.1cm) and a thickness of between 1 and 16 inches (3 and 41cm). In an embodiment the window **420** of the adapter frame **400** has a width of 49 inches (1.2m), a height of 12.2 inches (31.0cm) and a thickness of between 1 and 16 inches (3 and 41cm).

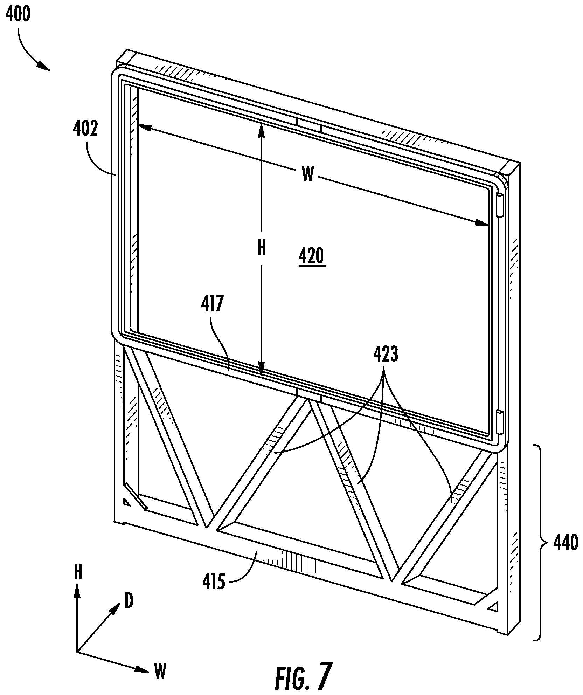

In another example, as shown in Figure 7, the supporting section **440** can include a plurality of truss members **423.** The plurality of truss members **423** can extend from a bottom structural segment **415** to a mid-spanning segment **417,** which can also constitute an edge, and optionally the bottom edge of the window **420.**

The adapter frame **400** can include a corner support **426** disposed between adjacent structural segments **402.** The corner support **426** can be used to add rigidity to the adapter frame **400** and reinforce the structural segments **402** against deformation.

The adapter frame **400** can include TRU side fastening features **410** for securing the adapter frame **400** to a TRU **10.** The adapter frame **400** can include rail car side fastening features **411** for securing the adapter frame **400** to a railway car **200.** The TRU side fastening features **410** can be disposed along one face of the adapter frame **400,** for example, the front surface **405** of the adapter frame **400.** The rail car side fastening features **411** can be disposed on an opposing side of the adapter frame **400,** for example the rear surface **406.** The TRU side fastening features **410** and the rail car side fastening features **411** can be any suitable mechanical fastener, for example a threaded stud, a captured nut, a slot or opening for accepting a bolt, a weld stud, a flange, a tab, or a combination including at least one of the foregoing. For example, the adapter frame **400** can include a threaded stud extending from a front surface **405** of the adapter frame **400,** along the depth dimension, for inserting into a corresponding opening on the TRU **10** which can accept the treaded stud and allow for movement of a washer and/or nut to securely fasten the adapter frame **400** to the TRU **10.**

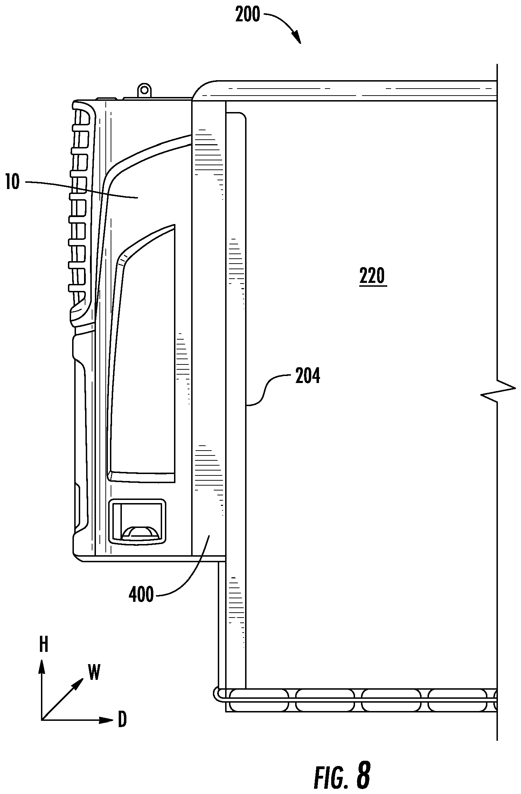

Figure 8 shows a side view of a TRU **10** and adapter frame **400** installed onto a railway car **200.** The adapter frame **400** can be used to position the TRU further away from the railway car **200** and reduce or eliminate the distance of TRU protrusion into the cargo volume **220.** By using an adapter frame **400** to mount the TRU to the railway car, the obstructed volume **250** can be reduced or eliminated completely offering a corresponding improvement in available cargo volume **220.** The use of an adapter frame **400** allows for ordering the sequence of assembly in the most beneficial way to the installer. The adapter frame **400** can first be installed onto a TRU **10,** then the TRU and adapter frame securely mounted to a railway car **200.** Or, the adapter frame **400** can first be installed on the railway car **200** then the TRU **10** can be mounted to the adapter frame **400.**

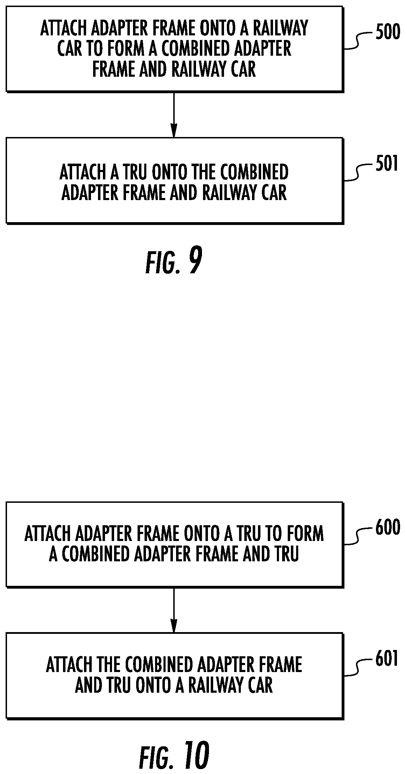

Figure 9 illustrates an installation method that can be employed using the adapter frame **400.** A first step **500** includes attaching an adapter frame **400** onto a railway car **200** to form a combined adapter frame and railway car. The attachment can be made using any suitable fastening method, for example the adapter frame **400** can be welded to the railway car **200,** the plurality of railway car side fastening features **411** can be relied on to secure the adapter frame **400** to a wall of a railway car **200.** By way of further example, threaded studs extended from the adapter frame **400** could be inserted into corresponding holes in the railway car **200** and nuts fastened thereto to secure the adapter frame **400** to the railway car **200.** The TRU **10** can then be installed to the combined adapter frame and railway car in a second step **501** using any suitable fastening method, for example utilizing the TRU car side fastening features **410.**

Figure 10 illustrates an installation method that can be employed using the adapter frame **400.** A first step **600** includes attaching an adapter frame **400** to a TRU **10** to form a combined adapter frame and TRU. The attachment can be made using any suitable fastening method, for example the plurality of TRU side fastening features **410** can be relied on to secure the adapter frame **400** and the TRU **10.** The combined adapter frame and TRU can then be installed to a railway car **200** in a second step **601** using any suitable fastening method, for example utilizing the railway car side fastening features **411.** During and after installation the window **420** of the adapter frame **400** can be aligned with an opening in the wall of the railway car **200.**

As part of the installation process the opening **102,** the adapter frame **400,** the TRU **10,** or a combination including at least one of the foregoing can be prepared with a gasket and/or seal material. The gasket and/or seal material can be a unitary structure applied to a side of the adapter frame **400** or the corresponding attachment surface (TRU **10** or railway car **200**) prior to assembly in any of steps **500, 501, 600,** and/or **601.** The gasket and/or seal material can include a fluid material (e.g., silicone caulk) applied before, during, and/or after the assembly in any of steps **500, 501, 600,** and/or **601.** The gasket and/or seal material can be disposed at least along a portion of the opening **102,** one or more sides of the corresponding window **420** in the adapter frame **400,** the perimeter of the protruding evaporator section **70,** or a combination including at least one of the foregoing. The gasket and/or seal material can include any suitable material. For example, the gasket and/or seal can include a thermal insulation (e.g. fiberglass, cellulose, cork, and the like), a compliant material such as polyethylene, polypropylene, polystyrene, polyvinyl chloride, natural or synthetic rubber, neoprene, nylon, polyacrylonitrile, PVB, silicone, an expanded polymer, extruded polymer, or foamed polymer including at least one of the foregoing, or a combination thereof.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present invention as defined by the claims. The present invention is not limited to the particular embodiment disclosed for carrying out this present disclosure, but the present invention will include all embodiments falling within the scope of the claims.

## Claims

1. An adapter frame (400) for attaching a transport refrigeration unit (10), called TRU, to a railway car (200), the adapter frame comprising
a window (420) and a supporting section (440),
the window (420) having a rectangular shape,
the supporting section (440) extending from an edge of the window (420) and comprising two or more truss members (422) spanning from an edge of the window to a corresponding edge of the supporting section,
wherein the adapter frame (400) is configured for installation between the TRU (10) and the railway car (200) such that when installed a distal end (66) of a protruding evaporator section (70) of the TRU protrudes into the window (420).

2. The adapter frame (400) of claim 1, wherein when installed the distal end of the TRU (10) extends past an interior surface (104) of the railway car wall (106).

3. The adapter frame (400) of claim 1, wherein when installed the distal end of the TRU (10) is flush with an interior surface (104) of the railway car wall (106).

4. The adapter frame (400) of claim 1, wherein when installed the distal end of the TRU (10) is does not extend past an interior surface (104) of the railway car wall (106).

5. The adapter frame (400) of any of claims 1-4, further comprising a plurality of fastening features (410) disposed on a surface of the adapter frame.

6. The adapter frame (400) of claim 5, wherein the fastening features (410) comprise a combination of a threaded stud, a captured nut, a slot or opening for accepting a bolt, a weld stud, a flange, a tab, or a combination comprising at least one of the foregoing.

7. The adapter frame (400) of any of claims 1-6, further comprising a corner support (426) fastened to a surface of the adapter frame, the corner support extending diagonally between two adjacent structural segments (402) forming a corner.

8. The adapter frame (400) of claim 7, wherein the supporting section (440) has a quadrilateral shape where a width dimension is larger than a height dimension and the corner support (426) extends when installed along a TRU side surface of the adapter frame, adjacent to a corner of the quadrilateral shape, from one side to an adjacent side of the supporting section.

9. The adapter frame (400) of claim 6 or 7, wherein the structural segments (402) comprise quadrilateral cross-sectional shape.

10. The adapter frame (400) of any of claims 1-8, wherein the window (420) comprises a width of 40 inches (1m) to 60 inches (1.5m), a height of 8 inches (20cm) to 20 inches (50cm).

11. The adapter frame (400) of any of claims 1-9, wherein the window (420) comprises a width of 60 inches (1.5m) to 80 inches (2m), a height of 40 inches (1m) to 60 inches (1.5m).

12. The adapter frame (400) as in any preceding claim, wherein the window (420) aligns when installed with an opening in a wall (104) of the railway car (200).

13. A method of installing a transport refrigeration unit (10), called TRU, onto a railway car (200) comprising:
attaching an adapter frame (400) onto the transport refrigeration unit (10) using a plurality of fastening features disposed along a surface of the adapter frame to form a combined adapter frame and TRU, and attaching the combined adapter frame (400) and transport refrigeration unit (10) onto a railway car (200) using a plurality of fastening features (211) disposed along an opposing surface of the adapter frame thereby securing the transport refrigeration unit, adapter frame and railway car together, or
attaching an adapter frame (400) onto the railway car (200) using a plurality of fastening features (411) disposed along a surface of the adapter frame to form a combined adapter frame and railway car, and attaching the TRU (10) onto the combined adapter frame (400) and railway car (200) using a plurality of fastening features (410) disposed along an opposing surface of the adapter frame thereby securing the transport refrigeration unit, adapter frame and railway car together.

14. The method of claim 13 further comprising:
sealing a gap between the TRU (10) and a railway car wall (106).

## Patentansprüche

1. Adapterrahmen (400) zum Anbringen einer Transportkühleinheit (10), genannt TRU (transport refrigeration unit, TRU), an einen Eisenbahnwagen (200), wobei der Adapterrahmen Folgendes umfasst:
ein Fenster (420) und einen Stützabschnitt (440),
wobei das Fenster (420) eine rechteckige Form aufweist,
wobei sich der Stützabschnitt (440) von einer Kante des Fensters (420) erstreckt und zwei oder mehr Fachwerkelemente (422) umfasst, die sich von einer Kante des Fensters zu einer entsprechenden Kante des Stützabschnitts spannen,
wobei der Adapterrahmen (400) zur Installation zwischen der TRU (10) und dem Eisenbahnwagen (200) konfiguriert ist, sodass, wenn installiert, ein distales Ende (66) eines vorstehenden Verdampferabschnitts (70) der TRU in das Fenster (420) hineinragt.

2. Adapterrahmen (400) nach Anspruch 1, wobei sich das distale Ende der TRU (10), wenn installiert, über eine Innenfläche (104) der Eisenbahnwagenwand (106) hinaus erstreckt.

3. Adapterrahmen (400) nach Anspruch 1, wobei das distale Ende der TRU (10), wenn installiert, bündig mit einer Innenfläche (104) der Eisenbahnwagenwand (106) ist.

4. Adapterrahmen (400) nach Anspruch 1, wobei sich das distale Ende der TRU (10), wenn installiert, nicht über eine Innenfläche (104) der Eisenbahnwagenwand (106) hinaus erstreckt.

5. Adapterrahmen (400) nach einem der Ansprüche 1-4, ferner umfassend eine Vielzahl von Befestigungsmerkmalen (410), die auf einer Oberfläche des Adapterrahmens angeordnet ist.

6. Adapterrahmen (400) nach Anspruch 5, wobei die Befestigungsmerkmale (410) eine Kombination aus einem Gewindestift, einer gefangenen Mutter, einem Schlitz oder einer Öffnung zum Aufnehmen eines Bolzens, eines Schweißbolzens, eines Flansches, einer Lasche oder einer Kombination, die mindestens eines der Vorgenannten umfasst, umfassen.

7. Adapterrahmen (400) nach einem der Ansprüche 1-6, ferner umfassend eine Eckstütze (426), die an einer Oberfläche des Adapterrahmens befestigt ist, wobei sich die Eckstütze diagonal zwischen zwei benachbarten Struktursegmenten (402) erstreckt, die eine Ecke bilden.

8. Adapterrahmen (400) nach Anspruch 7, wobei der Stützabschnitt (440) eine viereckige Form aufweist, wobei eine Breitenabmessung größer als eine Höhenabmessung ist und sich die Eckstütze (426), wenn installiert, entlang einer TRU-Seitenfläche des Adapterrahmens erstreckt, benachbart zu einer Ecke der viereckigen Form, von einer Seite zu einer benachbarten Seite des Stützabschnitts.

9. Adapterrahmen (400) nach Anspruch 6 oder 7, wobei die Struktursegmente (402) eine viereckige Querschnittsform umfassen.

10. Adapterrahmen (400) nach einem der Ansprüche 1-8, wobei das Fenster (420) eine Breite von 40 Zoll (1 m) bis 60 Zoll (1,5 m) und eine Höhe von 8 Zoll (20 cm) bis 20 Zoll (50 cm) umfasst.

11. Adapterrahmen (400) nach einem der Ansprüche 1-9, wobei das Fenster (420) eine Breite von 60 Zoll (1,5 m) bis 80 Zoll (2 m) und eine Höhe von 40 Zoll (1 m) bis 60 Zoll (1,5 m) umfasst.

12. Adapterrahmen (400) nach einem der vorhergehenden Ansprüche, wobei das Fenster (420), wenn installiert, mit einer Öffnung in einer Wand (104) des Eisenbahnwagens (200) ausgerichtet ist.

13. Verfahren zum Installieren einer Transportkühleinheit (10), genannt TRU, auf einem Eisenbahnwagen (200), umfassend:
Anbringen eines Adapterrahmens (400) an der Transportkühleinheit (10) unter Verwendung einer Vielzahl von Befestigungsmerkmalen, die entlang einer Oberfläche des Adapterrahmens angeordnet ist, um eine Kombination aus Adapterrahmen und TRU zu bilden, und Anbringen der Kombination aus Adapterrahmen (400) und Transportkühleinheit (10) auf einem Eisenbahnwagen (200) unter Verwendung einer Vielzahl von Befestigungsmerkmalen (211), die entlang einer gegenüberliegenden Oberfläche des Adapterrahmens angeordnet ist, wodurch die Transportkühleinheit, der Adapterrahmen und der Eisenbahnwagen zusammen gesichert werden, oder
Anbringen eines Adapterrahmens (400) an dem Eisenbahnwagen (200) unter Verwendung einer Vielzahl von Befestigungsmerkmalen (411), die entlang einer Oberfläche des Adapterrahmens angeordnet ist, um eine Kombination aus Adapterrahmen und Eisenbahnwagen zu bilden, und Anbringen der TRU (10) an der Kombination aus Adapterrahmen (400) und Eisenbahnwagen (200) unter Verwendung einer Vielzahl von Befestigungsmerkmalen (410), die entlang einer gegenüberliegenden Oberfläche des Adapterrahmens angeordnet ist, wodurch die Transportkühleinheit, der Adapterrahmen und der Eisenbahnwagen zusammen gesichert werden.

14. Verfahren nach Anspruch 13, ferner umfassend:
Abdichten eines Spalts zwischen der TRU (10) und einer Eisenbahnwagenwand (106).

## Revendications

1. Cadre adaptateur (400) pour la fixation d'une unité de réfrigération de transport (10), appelée TRU, à un wagon (200), le cadre adaptateur comprenant :
une fenêtre (420) et une section de support (440),
la fenêtre (420) ayant une forme rectangulaire,
la section de support (440) s'étendant depuis un bord de la fenêtre (420) et comprenant deux éléments de treillis (422) ou plus s'étendant d'un bord de la fenêtre à un bord correspondant de la section de support,
dans lequel le cadre adaptateur (400) est configuré pour être installé entre la TRU (10) et le wagon (200) de sorte que lorsqu'il est installé, une extrémité distale (66) d'une section d'évaporateur en saillie (70) de la TRU fait saillie dans la fenêtre (420).

2. Cadre adaptateur (400) selon la revendication 1, dans lequel, lorsqu'il est installé, l'extrémité distale de la TRU (10) s'étend au-delà d'une surface intérieure (104) de la paroi de wagon (106).

3. Cadre adaptateur (400) selon la revendication 1, dans lequel, lorsqu'il est installé, l'extrémité distale de la TRU (10) affleure une surface intérieure (104) de la paroi de wagon (106).

4. Cadre adaptateur (400) selon la revendication 1, dans lequel, lorsqu'il est installé, l'extrémité distale de la TRU (10) ne s'étend pas au-delà d'une surface intérieure (104) de la paroi de wagon (106).

5. Cadre adaptateur (400) selon l'une quelconque des revendications 1 à 4, comprenant en outre une pluralité d'éléments de fixation (410) disposés sur une surface du cadre adaptateur.

6. Cadre adaptateur (400) selon la revendication 5, dans lequel les éléments de fixation (410) comprennent une combinaison d'un goujon fileté, d'un écrou bloqué, d'une fente ou d'une ouverture pour accepter un boulon, d'un goujon soudé, d'une bride, d'une languette, ou une combinaison comprenant au moins l'un de ce qui précède.

7. Cadre adaptateur (400) selon l'une quelconque des revendications 1 à 6, comprenant en outre un support d'angle (426) fixé à une surface du cadre adaptateur, le support d'angle s'étendant en diagonale entre deux segments structurels adjacents (402) formant un angle.

8. Cadre adaptateur (400) selon la revendication 7, dans lequel la section de support (440) a une forme quadrilatérale dans laquelle une dimension de largeur est supérieure à une dimension de hauteur et le support d'angle (426) s'étend lorsqu'il est installé le long d'une surface latérale de TRU du cadre adaptateur, adjacent à un angle de la forme quadrilatérale, d'un côté à un côté adjacent de la section de support.

9. Cadre adaptateur (400) selon la revendication 6 ou 7, dans lequel les segments structurels (402) comprennent une forme de section transversale quadrilatérale.

10. Cadre adaptateur (400) selon l'une quelconque des revendications 1 à 8, dans lequel la fenêtre (420) comprend une largeur comprise entre 40 pouces (1 m) et 60 pouces (1,5 m), une hauteur comprise entre 8 pouces (20 cm) et 20 pouces (50 cm).

11. Cadre adaptateur (400) selon l'une quelconque des revendications 1 à 9, dans lequel la fenêtre (420) comprend une largeur comprise entre 60 pouces (1,5 m) et 80 pouces (2 m), une hauteur comprise entre 40 pouces (1 m) et 60 pouces (1,5 m) .

12. Cadre adaptateur (400) selon une quelconque revendication précédente, dans lequel la fenêtre (420) s'aligne lorsqu'elle est installée avec une ouverture dans une paroi (104) du wagon (200) .

13. Procédé d'installation d'une unité de réfrigération de transport (10), appelée TRU, sur un wagon (200) comprenant :
la fixation d'un cadre adaptateur (400) sur l'unité de réfrigération de transport (10) à l'aide d'une pluralité d'éléments de fixation disposés le long d'une surface du cadre adaptateur pour former un cadre adaptateur et une TRU combinés, et la fixation du cadre adaptateur (400) et de l'unité de réfrigération de transport (10) combinés sur un wagon (200) à l'aide d'une pluralité d'éléments de fixation (211) disposés le long d'une surface opposée du cadre adaptateur fixant ainsi l'unité de réfrigération de transport, le cadre adaptateur et le wagon ensemble, ou
la fixation d'un cadre adaptateur (400) sur le wagon (200) à l'aide d'une pluralité d'éléments de fixation (411) disposés le long d'une surface du cadre adaptateur pour former un cadre adaptateur et un wagon combinés, et la fixation de la TRU (10) sur le cadre adaptateur (400) et un wagon (200) combinés à l'aide d'une pluralité d'éléments de fixation (410) disposés le long d'une surface opposée du cadre adaptateur fixant ainsi l'unité de réfrigération de transport, le cadre adaptateur et le wagon ensemble.

14. Procédé selon la revendication 13, comprenant en outre :
le scellement d'un espace entre la TRU (10) et une paroi de wagon (106).
